# FASCICULE DE BREVET EUROPEEN

(11) **EP 1 519 461 B1**
(45) Date de publication et mention de la délivrance du brevet: **28.02.2007**
(21) Numéro de dépôt: 04103330.9
(22) Date de dépôt: 13.07.2004
(51) Int. Cl.: H02B 1/46

(54) **Boite, notamment pour organes électriques.**
Dose, insbesondere für elektrische Geräte
Box, particularly for electrical devices

(30) Priorité: 29.07.2003 FR 0309313
(43) Date de publication de la demande: 30.03.2005
(73) Titulaire: SCHNEIDER ELECTRIC INDUSTRIES SAS, 92500 Rueil-Malmaison (FR)
(72) Inventeur: Bouet, Emmanuel, 67200, Sarre Union (FR); Buchy, Bernard, 67320, Schoenbourg (FR); Larsky, Pierre, 57450, Cappel (FR)

(56) Documents cités:
- EP-A- 0 961 374
- FR-A- 2 818 252

## Description

La présente invention concerne une boîte, destinée notamment à loger des organes électriques, et comprenant un boîtier et un couvercle de section quadrangulaire, le couvercle devant être rapporté de façon étanche sur le boîtier.

Dans des boîtes connues, du type boîtes industrielles ou boîtes de distribution, par exemple décrites dans les documents FR 2818252, GB 2 187 228, DE 40 33 109 et FR 2 811 305, le couvercle présente à sa périphérie un bord rabattu pour se raccorder aux parois latérales du boîtier ; il présente aux coins des orifices susceptibles de loger chacun un élément de fixation à pied de verrouillage, notamment du type quart de tour, le boîtier ayant à chaque coin une cheminée d'angle. La cheminée est destinée à recevoir l'élément de fixation et est dotée de moyens de retenue du pied de verrouillage.

Dans le document EP 961 374 est décrite une boîte dont le couvercle présente aux coins des fûts qui peuvent être introduits dans les cheminées d'angle du boîtier. Les fûts ont des bras élastiques pour permettre de chasser des chevilles de solidarisation du couvercle avec le boîtier. Mais un tel dispositif n'est pas approprié à la fixation d'un couvercle par des éléments de fixation du type quart de tour.

De plus, les couvercles des boîtes connues ont l'inconvénient de ne pas assurer une imperdabilité certaine, ni une bonne protection, des éléments de fixation.

L'invention a notamment pour but de remédier à ces inconvénients.

Elle a aussi pour but de permettre d'utiliser avec le même couvercle, adapté aux éléments de fixation quart de tour, des éléments de fixation à vis et écrous adaptateurs , en renforçant l'assemblage des adaptateurs.

Selon l'invention, dans une boîte du type décrit, les fûts prévus aux angles du couvercle comprennent un secteur de protection et de maintien qui a une hauteur plus grande que celle du bord rabattu et qui comporte sur sa surface interne au moins une glissière axiale de guidage et de maintien et un cran de retenue en rotation pour un élément de fixation du type quart de tour. Les fûts assurent ainsi non seulement un guidage satisfaisant du couvercle lors de sa pose sur le boîtier, mais aussi une translation guidée et un maintien contre une rotation intempestive des éléments de fixation quart de tour.

L'élément de fixation quart de tour a un pied de verrouillage et le secteur de protection et de maintien du fût a de préférence une hauteur permettant de masquer le pied de verrouillage quand l'élément de fixation est enfoncé dans l'orifice, ce qui détermine un carénage protégeant les éléments de fixation.

Le secteur de protection et de maintien du fût peut avantageusement être rigide, la glissière assurant une retenue de l'élément de fixation quart de tour en position de déblocage, le cran assurant une retenue de l'élément de fixation en position de blocage, en coopérant avec des formes respectives de l'élément de fixation.

Le fût peut de préférence avoir une forme générale cylindrique composée de secteurs cylindriques de hauteurs différentes, le secteur de protection et de maintien de grande hauteur étant muni de la glissière de guidage et maintien et du cran de retenue et d'une butée, le secteur de petite hauteur s'étendant angulairement de manière à permettre l'engagement de l'élément de fixation quart de tour contre des formes du boîtier.

Pour coopérer avec un élément de fixation différent, composé d'une vis et d'un adaptateur formant écrou et calé dans la cheminée, le fût peut présenter au moins un élément de forme applicable contre l'adaptateur, afin de confirmer la fixation de l'adaptateur dans la cheminée.

La description détaillée qui suit, en regard des dessins annexés, illustre un mode de réalisation donné à titre d'exemple.
La figure 1 représente en perspective une boîte pour organes électriques conforme à l'invention.
La figure 2 montre, à plus grande échelle, une vue en perspective éclatée de la boîte de la figure 1.
La figure 3 est une vue de dessus du boîtier de la boîte, le couvercle étant ôté.
La figure 4 est une vue de dessus du couvercle.
La figure 5 est une vue de côté, selon la flèche F, d'un coin du couvercle.
La figure 6 est une vue similaire en coupe selon le plan P-P.
La figure 7 montre, en coupe selon le plan Q-Q de la figure 4, un coin de la boîte doté d'un élément de fixation quart de tour, celui-ci étant en position de blocage.
La figure 8 montre, en coupe selon le plan Q-Q, le même coin de la boîte doté d'une vis de fixation, dans une position intermédiaire de vissage, et d'un adaptateur.
La figure 9 montre l'élément de fixation quart de tour en position de déblocage.
La figure 10 représente en perspective l'élément de fixation quart de tour
La figure 11 représente, en perspective de dessous, un fût d'angle du couvercle.

La boîte A illustrée sur les figures est une boîte industrielle, une boîte de dérivation, un coffret ou autre enveloppe analogue destinée à contenir des organes ou éléments électriques. La boîte, de forme générale parallélépipédique, comprend un boîtier B et un couvercle C en matière isolante. Le boîtier B présente une paroi de fond 10 et des parois latérales 11 afin de définir un espace interne 12 capable de loger les éléments électriques de façon étanche. Les parois latérales 11 définissent à l'opposé de la paroi de fond 10 un col périphérique 11 a qui reçoit de façon étanche le couvercle C. Les parois 11 se raccordent entre elles aux coins par des parois d'angle rentrantes 11 b qui dégagent des volumes distincts de l'espace 12 et affectés à des cheminées cloisonnées orientées transversalement à la paroi de fond 10. Des ouvertures 11c auxquelles sont adaptés des opercules découpables ou défonçables sont d'autre part prévues dans les parois 11 pour y faire passer des câbles.

Le couvercle C, de forme quadrangulaire, est fixé au boîtier B par des éléments de fixation du type quart de tour S1 ou du type vis filetée S2. Aux quatre coins, le couvercle C offre des orifices 20 dont chacun, d'axe orienté transversalement à la paroi de fond 10, ménage un passage pour l'élément de fixation S1 ou S2. Chaque orifice 20 loge la tête de l'élément S1 ou S2 et a un fond mince 21 pourvu d'un passage rétréci 22 pour le fût de l'élément de fixation S1 ou S2. Du côté du boîtier, le couvercle C présente, aux quatre coins et coaxialement aux orifices 20, des fûts rigides de guidage et de protection 23 à forme générale cylindrique d'axe X, cette forme étant sectorisée comme décrit plus loin.

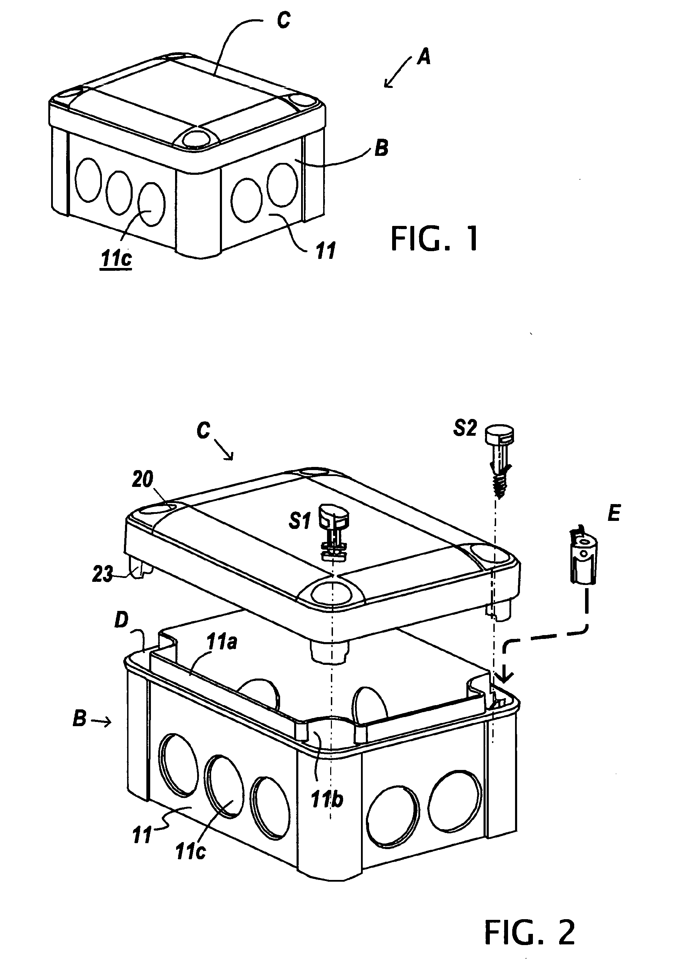

La cheminée cloisonnée D (voir notamment figures 2, 7 et 8) s'étend du haut en bas du boîtier en étant complètement isolée de l'espace 12 de la boîte. Elle est agencée pour guider et loger dans sa partie supérieure le fût correspondant 23 du couvercle, notamment grâce à une portion cylindrique, et pour recevoir indifféremment, soit l'élément de fixation quart de tour S1, soit l'élément de fixation à vis S2 et son adaptateur E. L'axe X des orifices 20, des fûts 23 et des éléments S1 ou S2 est perpendiculaire à la paroi de fond 10 du boîtier.

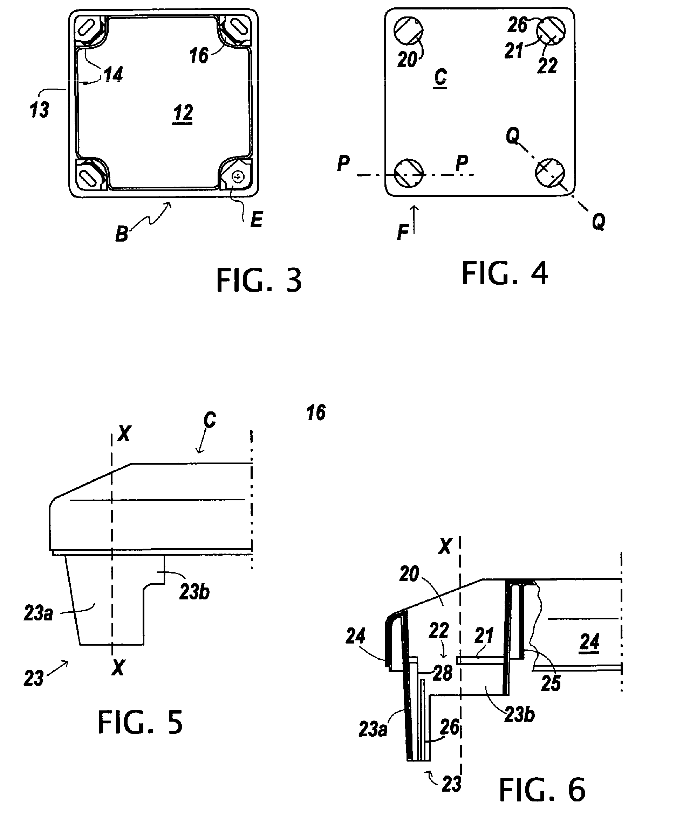

Le couvercle C présente sur son pourtour un bord rabattu 24, pour s'appliquer sur un bord correspondant 13 du boîtier ; le couvercle présente aussi, vers l'intérieur, un rabat 25 qui est moins haut que le bord 24 et qui coopère, à l'aide de moyens d'étanchéité non représentés, avec une arête périphérique 14 du boîtier. Comme on le voit figure 3, l'arête périphérique 14 s'incurve aux angles de la boîte vers le centre de celle-ci. Les fûts 23 se composent de deux secteurs de cylindre de forme adaptée à la cheminée, présentant une légère dépouille externe et des hauteurs différentes, à savoir un secteur 23a externe (situé à l'opposé du centre de la boîte) et un secteur 23b interne (situé vers le centre), le secteur 23a étant plus haut que le secteur 23b. Les secteurs s'étendent chacun sensiblement sur 180°.

La cheminée D comporte une cloison 15 qui la sépare en un volume principal 15a et un volume annexe 15b. La cloison 15 se raccorde à sa partie haute à la paroi d'angle rentrante 11 b par une bride ou cloison transversale 16 et comprend une ouverture 17 sous-jacente à la bride 16. Sous la bride 16 est prévue une forme de guidage 18 pour l'élément quart de tour, dotée d'un cran d'arrêt 18a et d'une butée 18b. En vue de dessus, le fût 23 du couvercle C recouvre par son secteur 23b la bride 16 et par son secteur 23a le reste de la cheminée.

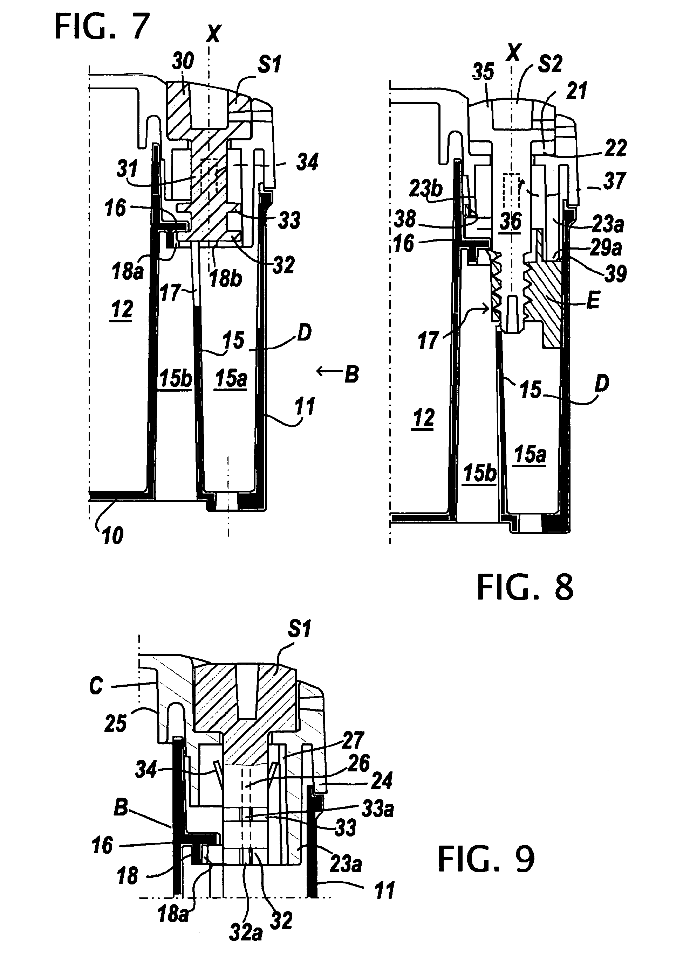

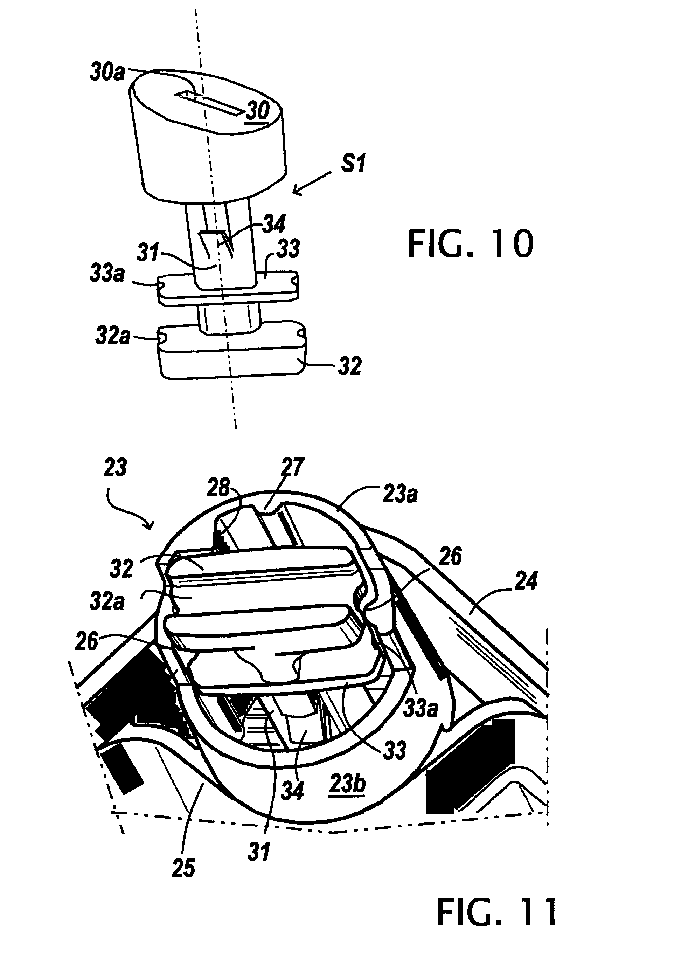

L'élément quart de tour S1 comprend (voir figures 7, 9 et 10) une tête 30 dotée d'une empreinte de manoeuvre 30a, et une tige 31 qui se termine à l'opposé de la tête par un pied de verrouillage 32. Le pied 32 est symétrique pour agir bilatéralement et est doté d'au moins une échancrure de maintien 32a. Il est aussi prévu, au dessus du pied 32, un épaulement 33 doté d'au moins une échancrure de maintien 33a pour coopérer avec un cran situé à l'intérieur du fût 23 du couvercle. Des éléments de maintien élastique dans le couvercle, tels que des ailettes 34, lèvres ou éléments analogues partiels ou périphériques, sont prévus en dépassement de la section droite de la tige pour coopérer avec le dessous du fond 21 de l'orifice 20.

La vis S2 (figure 8) présente une tête 35 et une tige filetée 36 et elle est retenue aussi dans l'orifice 20 par des ailettes 37. La tige 36 coopère par un filetage à pas rapide avec un trou fileté prévu dans un adaptateur E qui est glissé selon la direction X dans la chambre 15a, engagé partiellement dans l'ouverture 17 et encliqueté, par exemple par au moins un bras élastique, sous la bride 16.

Les fûts 23 prévus aux coins du couvercle comprennent chacun deux formes axiales telles que des glissières 26, un cran 27 et une butée 28. Les glissières 26 s'étendent selon la direction X et sont diamétralement opposées, tandis que le cran 27 est situé au milieu entre les glissières et vers l'extérieur du coin. Les glissières 26 ont un rôle de guidage du doigt 32 de l'élément quart de tour S1, au moyen des échancrures 32a,33a de celui-ci, lors de son glissement dans l'orifice 20 ; elles assurent aussi un maintien dans cette position d'introduction (qui est aussi la position de déblocage couvercle/boîtier). Le cran 27 assure, avec le cran 18a correspondant prévu dans la cheminée D sous la bride 16, et en coopérant avec les échancrures 33a, le maintien de l'élément quart de tour S1 dans la position de blocage couvercle/boîtier. On notera que les crans de blocage 27 et 18a sont situés à 180° par rapport à l'axe de l'élément S1, selon le plan Q-Q, ce qui assure grâce à la symétrie du pied 32 un excellent verrouillage.

Le couvercle C se monte sur le boîtier B de la façon décrite ci-après.
Les éléments quart de tour S1 ou les vis S2 sont introduits dans les orifices 20 du couvercle par passage du pied de verrouillage 32 (élément S1) ou de la tige filetée (vis S2) dans le passage 22 ; les ailettes 34,37 se rétractent en franchissant le passage 22, puis s'écartent comme indiqué figure 9, de façon à rendre imperdable l'élément S1,S2.

En supposant que l'élément est un élément quart de tour S1, celui-ci, au cours de son mouvement d'introduction, est guidé par les glissières 26 et reste maintenu dans sa position angulaire de déblocage. On remarquera aussi que la pose du couvercle sur une aire quelconque ne risque pas d'expulser l'élément S1 hors du couvercle, car il est protégé par le fût 23, de hauteur suffisante pour masquer son extrémité 32. Le couvercle est alors posé sur le boîtier comme indiqué figures 7 à 9. Pour verrouiller le couvercle afin de fermer la boîte, l'opérateur fait tourner l'élément S1 de 90° dans le sens permis par les butées 28 et 18b. En fin de rotation, les échancrures 32a,33a se logent dans les crans 18a,27 tandis que les pieds 32 et l'épaulement 33 s'appliquent contre les butées 18b et 28.

En supposant que l'élément est une vis S2, et que l'adaptateur associé E a été préalablement introduit dans la cheminée D, calé dans l'ouverture 17 et encliqueté contre la bride 16, le montage du couvercle se fera de la même façon, le blocage s'effectuant désormais par rotation de la vis dans le filetage femelle de l'adaptateur. Le fût contribue, au moyen d'éléments convenablement agencés, à la fixation de l'adaptateur E dans la cheminée D du boîtier. D'une part, comme on le voit figure 8, le contour de la partie 23b du fût 23 vient s'appliquer contre une surface 38 de l'adaptateur E située vers le centre de la boîte, ce qui assure un serrage radial de l'adaptateur et confirme la résistance mécanique de l'assemblage. D'autre part, l'extrémité basse 29a (figure 8) du secteur externe 23a du fût 23 peut s'appliquer axialement en butée contre une surface 39 de l'adaptateur qui est dirigée vers le haut.

### liste des références

- **A**: **boîte**

- **B**: **boîtier**
- 10: fond
- 11: parois latérales
11a col, 11b paroi d'isolement d'angle, 11c couvertures
- 12: espace interne

- **C**: **couvercle**
- 20: orifice d'angle
- 21: fond de l'orifice
- 22: passage (fente)
- 23: fût cylindrique
23a secteur haut, 23b secteur bas
- 24: bord tombé
- 25: rabat
- 26: glissières guidage/maintien
- 27: cran de blocage
- 28: butée
- 29a: extrémité basse du fût

- **D**: **cheminée cloisonnée**
- 15: cloison
- 15a: volume principal
- 15b: volume annexe
- 16: bride
- 17: ouverture
- 18: forme de guidage
18a cran, 18b butée

- **E**: **adaptateur**
- 38: surface interne de pression
- 39: surface axiale de butée

- **S1**: **élément quart de tour**
- 30: tête
30a empreinte
- 31: tige
- 32: pied de verrouillage
32a échancrure
- 33: épaulement
33a échancrure
- 34: ailettes

- **S2**: **vis filetée**
- 35: tête
- 36: tige
- 37: ailettes

## Revendications

1. Boîte, destinée notamment à loger des organes électriques, comprenant un boîtier et un couvercle de section quadrangulaire, le couvercle devant être rapporté de façon étanche sur le boîtier et présentant à sa périphérie un bord rabattu (24) et aux coins des orifices (20) susceptibles de loger chacun un élément de fixation doté d'une partie de verrouillage, le boîtier ayant des cheminées d'angle destinées à recevoir chacune un élément respectif de fixation et dotées de moyens de retenue de la partie de verrouillage, au moins deux coins du couvercle étant munis d'un fût (23) coaxial à l'orifice (20) et destiné au passage de l'élément de fixation, le fût (23) ayant une hauteur plus grande que celle du bord rabattu (24) et étant introduit de manière guidée dans la cheminée d'angle (D),
***caractérisée par le fait que***
les fûts (23) comprennent un secteur (23a) de protection et de maintien qui a une hauteur plus grande que celle du bord rabattu (24) et qui comporte sur sa surface interne au moins une glissière axiale de guidage et de maintien (26) et un cran de retenue en rotation pour un élément de fixation (S1) du type quart de tour.

2. Boîte selon la revendication 1, **caractérisée par le fait que** l'élément de fixation quart de tour (S1) a une partie de verrouillage (32) et que le secteur (23a) de protection et de maintien du fût (23) a une hauteur permettant de masquer la partie de verrouillage (32) quand l'élément de fixation (S1) est enfoncé dans l'orifice (20).

3. Boîte selon la revendication 1, **caractérisée par le fait que** le secteur (23a) de protection et de maintien du fût (23) est rigide, la glissière (26) assurant une retenue de l'élément de fixation quart de tour (S1) en position de déblocage, le cran (27) assurant une retenue de l'élément de fixation en position de blocage, en coopérant avec des formes respectives (32a,33a) de l'élément de fixation.

4. Boîte selon la revendication 1, **caractérisée par le fait que** le fût (23) a une forme générale cylindrique composée de secteurs cylindriques (23a,23b) de hauteurs différentes, le secteur de protection et de maintien (23a) de grande hauteur étant muni de la glissière de guidage et maintien (26) et du cran de retenue (27) et d'une butée (28), le secteur de petite hauteur (23b) s'étendant angulairement de manière à permettre l'engagement de l'élément de fixation quart de tour (S1) contre des formes du boîtier.

5. Boîte selon la revendication 1, **caractérisée par le fait que** l'élément de fixation (S1, S2) possède des ailettes élastiques de maintien imperdable dans le couvercle.

6. Boîte selon la revendication 1, **caractérisée par le fait que**, pour coopérer avec un élément de fixation composé d'une vis (S2) et d'un adaptateur formant écrou (E), calé dans la cheminée, le fût (23) présente au moins un élément de forme (23b,29a) applicable contre l'adaptateur (E), afin de confirmer la fixation de l'adaptateur dans la cheminée.

## Claims

1. Box, designed particularly to contain electrical devices, comprising a housing and a quadrangular shaped cover, the cover being added on and sealed to the housing and being provided with a folded down edge (24) around its periphery and being provided with orifices (20) at its corners, each orifice being designed to hold an attachment element with a locking part, the housing being provided with corner ducts each designed to contain a corresponding attachment element and provided with means of retaining the locking part, at least two corners of the cover being provided with a cylinder (23) coaxial with the orifice (20) and designed for passage of the attachment element, the cylinder (23) being higher than the folded down edge (24) and being inserted and guided in the corner duct (D),
**characterised in that**
the cylinders (23) comprise a protection and support sector (23a) that is higher than the folded down edge (24) and that comprises at least one axial guide and support slide (26) on its inner surface, and a rotation retaining notch for a quarter turn type attachment element (S1).

2. Box according to claim 1, **characterised in that** the quarter turn attachment element (S1) is provided with a locking part (32) and the protection and support sector (23a) of the cylinder (23) is sufficiently high to conceal the locking part (32) when the attachment element (S1) is fixed in the orifice (20).

3. Box according to claim 1, **characterised in that** the protection and support sector (23a) of the cylinder (23) is rigid, the slide (26) retaining the quarter turn attachment element (S1) in the locking position, the notch (27) retaining the attachment element in the locking position, cooperating with the corresponding shapes (32a,33a) of the attachment element.

4. Box according to claim 1, **characterised in that** the general shape of the cylinder (23) is preferably cylindrical composed of cylindrical sectors (23a, 23b) with different heights, the tall protection and support sector (23a) being provided with the guide and support slide (26) and the retaining notch (27) and a stop (28), the short sector (23b) passing through an angle so that it enables fixing the quarter turn attachment element (S1) in contact with all shapes of the housing.

5. Box according to claim 1, **characterised in that** the attachment element (S1, S2) has captive elastic support ribs in the cover.

6. Box according to claim 1, **characterised in that** the cylinder (23) has at least one shaped element (23b, 29a) that can be applied in contact with an adaptor (E), to cooperate with an attachment element composed of a screw (S2) and the adaptor (E) forming a nut, to consolidate attachment of the adaptor in the duct.

## Patentansprüche

1. Schrank, der insbesondere dazu bestimmt ist, elektrische Elemente zu enthalten, umfassend ein Gehäuse und einen Deckel mit viereckigem Querschnitt, wobei der Deckel dicht auf das Gehäuse aufgesetzt werden muss und an seiner Peripherie einen umgelegten Rand (24) und an den Ecken Öffnungen (20) aufweist, die jeweils ein mit einem Verriegelungsteil versehenes Befestigungselement beherbergen können, wobei das Gehäuse Winkelschächte aufweist, die dazu bestimmt sind, jeweils ein jeweiliges Befestigungselement aufzunehmen, und die mit Haltemitteln für den Verriegelungsteil versehen sind, wobei mindestens zwei Ecken des Deckels mit einem Schaft (23) koaxial zur Öffnung (20) versehen sind, der für den Durchgang des Befestigungselements bestimmt ist, wobei der Schaft (23) eine größere Höhe als jene des umgelegten Randes (24) aufweist und auf geführte Weise in den Winkelschacht (D) eingeführt wird,
**dadurch gekennzeichnet, dass**
die Schäfte (23) einen Abschnitt (23a) für den Schutz und Halt aufweisen, der eine größere Höhe als jene des umgelegten Randes (24) hat und der auf seiner Innenfläche mindestens eine axiale Gleitschiene zum Führen und Halten (26) und eine Raste zur Drehfeststellung für ein Befestigungselement (S1) vom Typ mit Vierteldrehung umfasst.

2. Schrank nach Anspruch 1, **dadurch gekennzeichnet, dass** das Befestigungselement mit Vierteldrehung (S1) einen Verriegelungsteil (32) hat, und dass der Abschnitt (23a) für den Schutz und Halt des Schaftes (23) eine Höhe hat, die es ermöglicht, den Verriegelungsteil (32) zu bedecken, wenn das Befestigungselement (S1) in die Öffnung (20) eingesteckt ist.

3. Schrank nach Anspruch 1, **dadurch gekennzeichnet, dass** der Abschnitt (23a) für den Schutz und Halt des Schaftes (23) starr ist, wobei die Gleitschiene (26) ein Halten des Befestigungselements mit Vierteldrehung (S1) in Freigabeposition sichert, wobei die Raste (27) ein Halten des Befestigungselements in Feststellposition sichert, wobei sie mit jeweiligen Formen (32a, 33a) des Befestigungselements zusammenwirkt.

4. Schrank nach Anspruch 1, **dadurch gekennzeichnet, dass** der Schaft (23) eine allgemeine zylindrische Form hat, die sich aus zylindrischen Abschnitten (23a, 23b) von unterschiedlichen Höhen zusammensetzt, wobei der Abschnitt für den Schutz und Halt (23a) von großer Höhe mit der Gleitschiene zum Führen und Halten (26) und der Halteraste (27) und einem Anschlag (28) versehen ist, wobei sich der Abschnitt von geringer Höhe (23b) im Winkel derart erstreckt, dass er das Eingreifen des Befestigungselements mit Vierteldrehung (S1) in die Formen des Gehäuses ermöglicht.

5. Schrank nach Anspruch 1, **dadurch gekennzeichnet, dass** das Befestigungselement (S1*,* S2) elastische Flügel zum sicheren Halten im Deckel umfasst.

6. Schrank nach Anspruch 1, **dadurch gekennzeichnet, dass** der Schaft (23) für das Zusammenwirken mit einem Befestigungselement, bestehend aus einer Schraube (S2) und einem eine Mutter bildenden Adapter (E), der im Schacht verkeilt ist, mindestens ein Element (23b, 29a) mit einer an den Adapter (E) anlegbaren Form aufweist, um die Befestigung des Adapters im Schacht zu gewährleisten.
